Europäisches Patentamt

European Patent Office

Office européen des brevets

(11) Publication number: **0 124 272**
**B1**

# (12) EUROPEAN PATENT SPECIFICATION

(45) Date of publication of patent specification: **14.11.90**

(51) Int. Cl.⁵: **G 03 B 9/14**

(21) Application number: **84302176.7**

(22) Date of filing: **30.03.84**

(54) **Exposure control device for camera.**

(30) Priority: **31.03.83 JP 45832/83**

(43) Date of publication of application:
**07.11.84 Bulletin 84/45**

(45) Publication of the grant of the patent:
**14.11.90 Bulletin 90/46**

(84) Designated Contracting States:
**DE GB**

(56) References cited:
**EP-A-0 036 180**
**DE-A-2 533 562**
**GB-A-1 043 622**
**US-A-3 074 336**
**US-A-3 969 739**
**US-A-4 176 930**
**US-E- 25 925**

**The Focal Encyclopaedia of Photography pp 1378,1379**

(73) Proprietor: **FUJI PHOTO FILM CO., LTD.**
**210 Nakanuma Minamiashigara-shi**
**Kanagawa-ken, 250-01 (JP)**

(72) Inventor: **Ohmura, Hiroshi c/o FUJI PHOTO**
**FILM CO., LTD.**
**2-26-30, Nishiazabu**
**Minato-ku Tokyo (JP)**

(74) Representative: **Woodward, John Calvin et al**
**VENNER SHIPLEY & CO. 368 City Road**
**London EC1V 2QA (GB)**

Courier Press, Leamington Spa, England.

**Description**

This invention relates to a camera having a first objective lens of a relatively long focal length, a second objective lens of a relatively short focal length, said lenses having respective optical axes arranged side by side, an exposure frame, selection means for providing first and second selectable optical paths to the exposure frame from the lenses respectively, and commonly operable exposure control elements for said lenses.

It is well known to provide a camera with a long focus lens (hereinafter referred to as a telephoto lens) and a short focus lens (hereinafter referred to as a wide angle lens) that are arranged side by side, which are used selectively for telephotography or wide angle photography. An exposure control device for use in such a camera may be installed in a space between an objective lens and a film plane as is disclosed in, for example Japanese Patent unexamined publication No. 128930/81. The exposure control device comprises a single shutter used for both telephotography and wide angle photography. A large space, however, is necessary around an exposure frame to receive a drive unit for the shutter, which is a disadvantage since in designing miniature compact cameras, it is often required to place other camera components in the space between a lens and the exposure aperture frame.

When it is difficult to place a single shutter in such a space, an alternative is to provide the camera with two independently operable shutters in front of the two lenses respectively. The arrangement of the independently operable shutters requires two separate drive means for the shutters and a control arrangement such that only one shutter can be operative at a particular time, which tends to make the camera bulky and inconvenient to operate.

U.S. 3074336, discloses an iris assembly for simultaneously providing the same light output from at least two lenses having different focal lengths or optical qualities.

In U.S. 3969739 a shutter comprising slidable blades defining overlappable appertures, for admitting scene light, is described in which the blades define further appertures that are overlappable in register with a light detector.

An alternative camera arrangement is shown in DE A 2 533 562 which discloses a camera with a telephoto and wide angle lens selectable by means of a mirror. A common shutter arrangement is provided in front of the lenses, the shutter arrangement comprising a pair of shutters operable simultaneously. The disadvantage of the camera disclosed in DE A 2 533 562 is that the two shutters must operate at the same speed, but the two lenses present different effective apertures at the exposure frame, so that upon operation of the mirror to select a different one of the lenses, a different exposure condition will occur.

This problem is solved in a camera including first and second objective lenses with different focal lengths, having respective optical axes arranged side by side, selection means for providing first and second selectable optical paths from the lenses respectively to an exposure frame and, commonly operable exposure control elements for said lenses, by the present invention which provides such a camera characterised in that said exposure control elements function as a combined iris and shutter and comprise blade means extending transversely of the optical axes of the lenses, said blade means being movable relative to one another to define commonly openable and fully closable apertures for light to pass through the lenses to the exposure frame, along said first and second paths respectively, and a drive means operative to produce said relative movement of the blade means, wherein the apertures, sizes are such as to produce substantially the same exposure condition at the exposure frame for both the lenses respectively.

The exposure control elements can be in the form of a combined diaphragm and shutter arrangement positioned in front of the two lenses which includes plate means movable relative to one another and extending transversely of the optical axes of the lenses said plate means defining commonly openable and closable apertures for light to pass through the first and second lenses to the exposure frame along said first and second paths respectively, and drive means operative to produce relative movement of the plate means so as to produce a common opening and closing of the apertures, said apertures being of different sizes selected such as to produce the same exposure condition at the exposure frame for the lenses respectively.

Thus, in accordance with the invention, the same exposure condition is produced irrespective of which lens is selected. Positioning the exposure control elements in front of the lenses permits minaturisation of the camera. Also, the invention does not require the exposure control elements to be operated selectively.

Further embodiments of the invention are set out hereafter in claims 2-14.

The invention will be more fully understood from the following description given by way of example only with reference to the several figures of the accompanying drawings, in which:

Figure 1 is a perspective illustration showing portions of an embodiment of the exposure control device of the present invention which is utilised as a diaphragm;

Figure 2 is a schematic diagram showing portions of the exposure control device of Figure 1 in a position where a light entry opening is intermediate;

Figure 3 is a schematic diagram similar to that of Figure 2 in a different position where a light entry opening is at a maximum;

Figure 4 is a schematic diagram similar to that of Figure 1 in a further different position where a light entry opening is at a minimum;

Figure 5 is a perspective illustration showing portions of another embodiment of an exposure control device of the present invention which is utilized as a diaphragm;

Figure 6 is a perspective illustration showing portions of a further embodiment of the present invention which is utilized as a shutter; and

Figure 7 is a perspective illustration showing portions of a still further embodiment of the present invention which is utilized as a shutter.

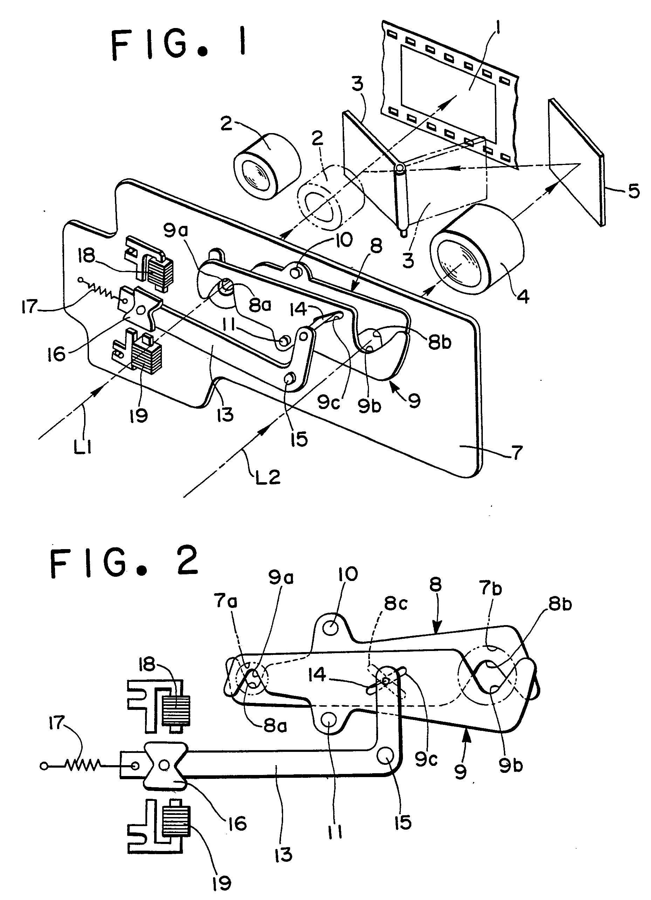

Referring now to Figures 1 to 4, it can be seen that an exposure control device is utilized as a diaphragm arrangement and associated with a photographic camera including two objective lenses, for example a wide angle and a telephoto lens, arranged side by side.

Placed in front of a film 1, there is provided a wide angle lens 2 which is shiftable from a position shown by the solid line to another position (shown by the chain-dotted line) for wide angle photography. A movable mirror 3 which is placed between the wide angle lens 2 and the film 1 is pivotable in cooperation with the shift of the wide angle lens 2 from a position shown by the solid line to the other one shown by the chain-dotted line where it allows the light rays that pass through the wide angle lens 2 to reach directly the film 1. The wide angle lens 2 may be fixedly placed in the position shown by the chain-dotted line when the movable mirror 3 in the position shown by the solid line does not interfere with the wide angle lens 2 in any position.

In an optical path L2, there is provided a telephoto lens 4 which is fixedly positioned. A mirror 5 which is fixedly positioned and intersects the optical path L2 at an angle reflects light rays passed through the telephoto lens 4 and then directs the reflected light rays toward the movable mirror 3. The light rays incident upon the movable mirror 3 are further reflected to travel to the film 1 along the optical path L1. The fixed and movable mirrors 5, 3 each reflecting the light rays passed through the telephoto lens at an angle less than a right angle and are so arranged as to organize a Z-shaped optical path. The provision of the mirrors 3 and 5 thus arranged ensure a sufficiently long optical path without providing a long distance between the optical paths L1 and L2.

In an arrangement for telephotography shown in Figure 1, the light that passes through the telephoto lens 4 is reflected by the fixed mirror 5 and then by the movable mirror 3, so as to merge into the film 1. The operation of a changing lever (not shown) causes the wide angle lens 2 and the movable mirror 3 to move to the position shown by the chain-dotted line, simultaneously, showing the light that passes through the wide angle lens 2 to reach directly the film 1. At this time, the movable mirror 3 in the said position prevents the reflected light ray by the fixed mirror 5 from lens 4 from entering in the optical path L1 and reaching the film 1.

In front of these lenses 2 and 4, there is provided a base plate 7 in which light entry openings 7a and 7b (Figure 2) are formed. On the base plate 7, there are provided two diaphragm plates or blades shown generally at 8 and 9 which are pivotally mounted on shafts 10 and 11, respectively, and are in partially overlapping relation to each other. The diaphragm blades 8 and 9 include light admitting recesses as shown at 8a, 9a and 8b, 9b to cooperatively define a variation of effective aperture openings in accordance with simultaneous overlapping displacement of one diaphragm blade with respect to the other. Although the aperture openings are different in size from each other, the F numbers of the aperture openings are corresponding to each other.

The diaphragm blades 8 and 9 additionally are configured to have slots 8c and 9c extending in different or opposite directions and overlapping each other crosswise. In order to move the diaphragm blades, there is provided an L-shaped blade moving lever 13 that is pivotally mounted on a shaft at 15 and usually maintained in a neutral position as shown in Figure 2 under the influence of a force exerted by an extension spring 17. On the base plate 7, there are additionally provided two electromagnets 18 and 19 between which an armature 16 is positioned.

In Figure 2 in the intermediate aperture opening position both of the electromagnets 18, 19 are deenergized to allow the blade moving lever 13 to be maintained in a neutral position under the influence of the spring force. As previously mentioned, the F numbers of the respective aperture openings which are the same are predetermined in accordance with the characteristics of the lenses used.

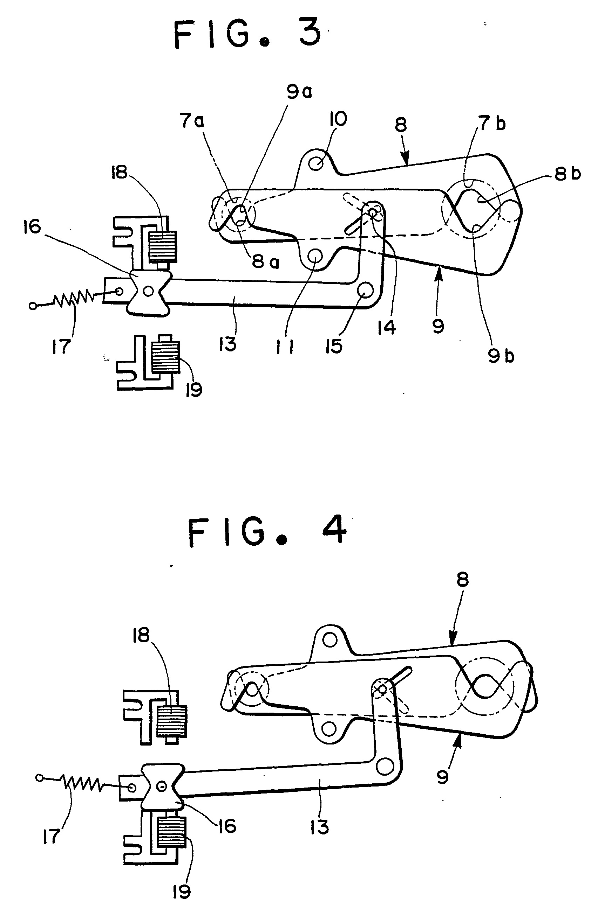

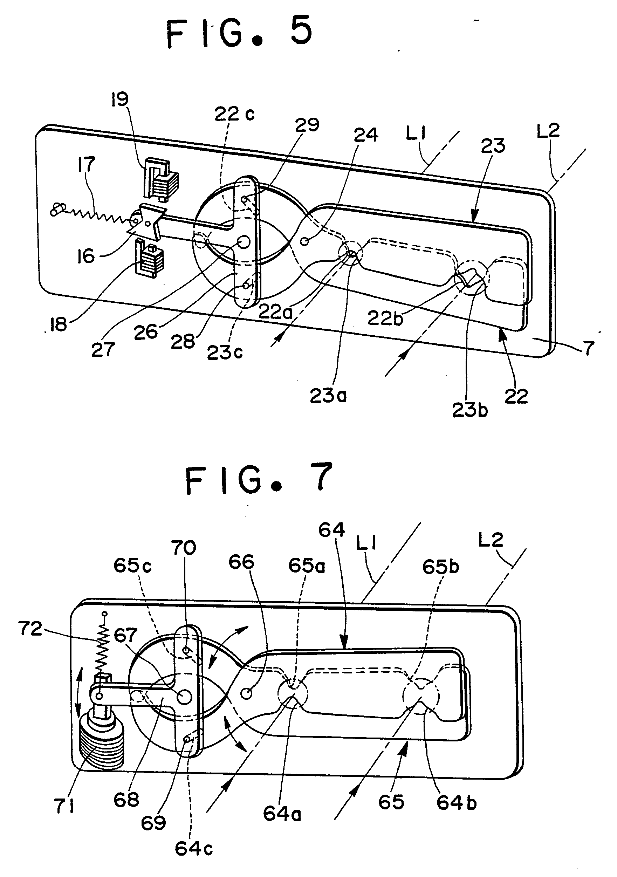

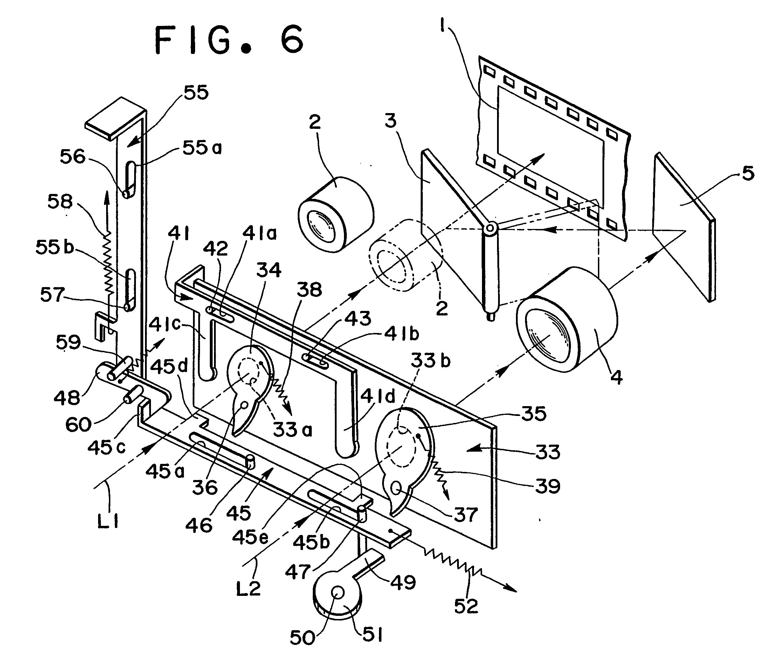

In Figure 3 in the maximum aperture opening position the electromagnet 18 is energized to hold the armature 16, causing the blade moving lever 13 to swing clockwise so that the diaphragm blades 8 and 9 move away from each other. As a result of this action, the overlapping displacement of one diaphragm blade with respect to the other diaphragm blade becomes small cooperatively to define the maximum aperture openings 8a-9a and 8b-9b which have the same F number.

In Figure 4 minimum aperture openings are produced when the electromagnet 19 is energized to hold the armature 16, causing the blade moving lever 13 to swing anticlockwise so that the diaphragm blades 8 and 9 move close to each other.

In Figure 5 the exposure control device is provided with the same reference numerals to denote similar parts to those of the first embodiment shown in Figures 1 to 4. In Figure 5, on the base plate 7, there are provided two diaphragm blades shown generally at 22 and 23 which are pivotally mounted on a common shaft 24 and are arranged in partially overlapping relation to each other. Each of the diaphragm blades 22 and 23 includes, respectively, light admitting recesses 22a and 22b, 23a and 23b different in size to cooperatively define effective aperture openings with simultaneous overlapping displacement of one diaphragm blade with respect to the other. To cause the pivotal movement of the diaphragm blades 22, 23, there is provided a T-shaped blade moving lever 26 which has two arms each provided with a pin 28, 29 at its end portion and said lever 26 is pivotably mounted on a shaft 27. The diaphragm blades 22, 23 are further provided, respectively, with extending portions including slots 22c and 23c into which the pin members 28 and 29 are engaged, respectively. The diaphragm blades 22 and 23 shown in Figure 5 define intermediate aperture openings because of the fact that the electromagnets 18 and 19 are deenergized and the blade moving lever 26 is subjected to a force of the spring 17. As is similar to the first embodiment, when the electromagnet 18 is energized to hold the armature 16, the blade moving lever 26 pivots anticlockwise about the shaft 27 so as to cause the diaphragm blades 22, 23 pivotally to move in opposite directions, i.e. away from each other. As a result of this, the diaphragm blades 22 and 23 cooperatively define maximum aperture openings. However, upon the occurrance of energization of the electromagnet 19, the diaphragm blades 22 and 23 are caused pivotally to move close to each other as a result of the clockwise pivotal movement of the blade moving lever 26 so as cooperatively to define a minimum aperture openings.

Referring now to Figure 6 showing still another embodiment of the exposure control device in accordance with the present invention which is utilized as a shutter arrangement and associated with a photographic camera including two objective lenses, for example a wide angle and a telephoto lens, arranged side by side. In front of the objective lenses, there is provided a base plate 33 in which light entry openings 33a and 33b are formed. Over the said light entry openings, there are provided shutter blades 34 and 35 which are pivotally mounted on shafts at 36 and 37 and urged to move clockwise by springs 38 and 39, respectively.

A time control lever 41 is configured to have projection arms 41c and 41d each extending downwardly therefrom. The time control lever 41 further includes guide slots 41a and 41b through which guide pins 42 and 43 on the base plate 33 are engaged so as to allow the movement thereof back and forth on the base plate 33. Each of the arms 41c and 41d of the time control lever 41 limits the pivotal movement of the shutter blade to set the shutter to a proper speed when moved forth. It is noted that the time control lever 41 can operate in such a way that the shutter speeds generated by the shutter blades 34 and 35 are the same.

A blade moving lever 45 which is provided for causing the pivotal movement of the shutter blades is configured to have guide slots 45a and 45b engageable with guide pins 46 and 47, a bent portion 45c which is engaged by the hook of a retaining lever 48 and projections 45d and 45e which hit the shutter blades pivotally to move in the course of the slide movement thereof. On the under side of the blade moving lever 45, there is provided a pin member 49 which is pushed by a lever 51 pivotally movable about a shaft 50 upon a winding operation of the film 1. Upon the anticlockwise pivotal movement of the lever 51, the blade moving lever 45 is forced to move to the left against a spring 52 to a position where the bent portion 45c is engaged by the retaining lever 48. After the engagement of the bent portion 45c by the retaining lever, the lever 51 returns to its initial position.

A release lever 55 is so provided as to move up and down lower through pin-slot engagements 55a-56 and 55b-57. At the lower end of the release lever 55, there is provided a pin member 59 which pushes the retaining lever 48 so as to cause an anticlockwise movement of the retaining lever 48. The release lever 55 causes the release of the engagement of the retaining lever 48 with the blade moving lever 45 upon moving down against a spring 58. The blade moving lever 45 thus released moves to the right under the influence of the spring force to hit on the tail ends of the shutter blades 34 and 35 by the projection 45d and 45e extending therefrom, respectively. As a result of this, the shutter blades 34 and 35 pivot anticlockwise about the respective shaft 36 and 37 to a position where the shutter blades strike the projection arms 41c and 41d to open the light entry openings 33a and 33b. Immediately after the strike, the shutter blades are forced to return to their initial positions under the influence of the spring 38 and 39 which are urged on the anticlockwise movements of the shutter blades 34 and 35, so as to close the light entry openings 33a and 33b. In the shutter arrangement, shutter speed is adjusted corresponding to the position of the time control lever 41, that is, the shutter speed becomes fast as the time control lever 41 is moved to the right. It should be also noted in this embodiment that the exposure control device may be so arranged as to serve as a diaphragm as well as a shutter. In this case, the blades 34 and 35 are operated to give the same shutter speed and F number.

Figure 7 shows another embodiment of the exposure control device utilized as a shutter arrangement. Located on the base plate, there are provided two shutter blades 64 and 65 which are partially overlapped and pivotally mounted on a shaft 66. The shutter blades are, respectively, configured to have two light admitting apertures 64a, 64b and 65a, 65b different in size. The shutter blades 64 and 65 are usually so positioned as to space the corresponding apertures from each other and thus intercept the light along the optical paths L1 and L2. When the shutter blades 64 and 65 simultaneously pivot in opposite directions, the corresponding apertures are brought into an overlapping relation to each other so as to produce aperture openings which admit the lights along the optical paths L1 and L2 to pass therethrough.

To make the pivotal movement of the shutter blades, there is provided a T-shaped blade moving lever 68 which is pivotally mounted on a shaft 67 and includes pin members 69 and 70 engaged with slots 64c and 65c formed in the shutter blades 64 and 65, respectively. The blade moving lever 68 is caused to pivot anticlockwise about the shaft 66 upon the energization of a solenoid 71, causing the shutter blades 64 and 65 to pivot simultaneously in opposite directions. As a result of the pivotal movement of the shutter blades 64, 65, the corresponding apertures 64a, 65a and 64b, 65b are brought into an overlapping relation to each other so as to admit light along the optical paths L1 and L2. Upon the de-energization of the solenoid 71 after a predetermined period, the blade moving lever 68 is caused to return to its initial position shown in Figure 7, and then the shutter blades 64 and 65 are also returned to their initial positions so as to intercept the light along the optical paths L1 and L2. The return movement of the blade moving lever 68 is effected by a spring 72.

Although the exposure control device shown in Figure 7 effects a single exposure control, it may be modified to effect exposure control in several steps in such a way well-known to those in the art. For example, it can be accomplished by providing the blade moving lever 68 with a pin member and a step cam against which the pin member abuts. The step cam is displaced by one or two solenoids to change the position where the abutment against the pin is occurred. A shutter operating lever which is previously brought into an operable position in cooperation with film winding operation is released by the manipulation of a shutter acutation member to move. In the course of the movement, the shutter operating lever hits and causes the blade moving lever 68 and hence, the shutter blades 64 and 65 to pivot. The pivotal movement of the blades is continued till the blade moving lever 68 comes to the abutment against the step cam. Further, the exposure control device may be modified to operate as a program shutter effecting exposure control in four steps. The modification is accomplished by the provision of another solenoid in addition to the solenoids and a stop lever which is moved by the said other solenoid so as to stop the blade moving lever 68 before the abutment of the pin member against the step cam.

In the case of a wide angle and a telephoto lens of the type having a front diaphragm arrangement effective apertures of the respective lenses of the same F number are in proportion to the respective focal length. For example, assuming that a wide angle lens has, the length of 30mm and a telephoto lens has the focal length of 90mm, and each of these lenses has an aperture of F 8 the effective aperture of the wide angle lens is 4 mm in diameter and that of the telephoto lens is 12mm in diameter. Assuming that each of these lenses has an aperture of F 16, the effective apertures are 2mm and 6 mm in diameter for the wide angle and the telephoto lens, respectively.

Consequently, to set simultaneously the effective apertures of a wide angle and a telephoto lens by using one drive means, the ratio of distance between the supporting point of two diaphragm blades and the optical axis of the lenses is determined corresponding to the ratio of the focal lengths thereof.

The telephoto lens and the wide angle lens in the above description are correlatively referred to represent two lenses, whereas the combination of a telephoto lens and a standard lens or a standard lens and a wide angle lens may be applicable following the same results.

## Claims

1. A camera including first and second objective lenses (2, 4) with different focal lengths having respective optical axes (L1, L2) arranged side by side, selection means (3) for providing first and second selectable optical paths from the lenses (2, 4) respectively to an exposure frame (1) and, commonly operable exposure control elements for said lenses, characterised in that said exposure control elements function as a combined iris and shutter and comprise blade means (8, 9, 22, 23, 34, 35, 64, 65) extending transversely of the optical axes (L1, L2) of the lenses (2, 4), said blade means being movable relative to one another to define commonly openable and fully closable apertures for light to pass through the lenses (2, 4) to the exposure frame (1), along said first and second paths respectively, and a drive means (13, 26, 68) operative to produce said relative movement of the blade means, wherein the apertures' sizes are such as to produce substantially the same exposure condition at the exposure frame for both the lenses (2, 4) respectively.

2. A camera as claimed in claim 1, characterised in that said blade means includes a first blade (8, 23, 64) with first (8a, 23a, 64a) and second (8b, 23b, 64b) recesses therein, which is movable in a direction perpendicular to the optical axes (L1, L2) of said first and second objective lenses (2, 4) and, a second blade (9, 22, 65) including third (9a, 22a, 65a) and fourth (9b, 22b, 65b) recesses respectively corresponding to said first and second recesses and which second blade is arranged for movement in an opposite sense to said first blade; said corresponding recesses forming said first and second apertures, respectively.

3. A camera as claimed in claim 2, characterised in that the drive means includes a pivotal driving lever (13, 26) with one end connected to said first and second blades (8, 9, 22, 23) and the opposite end provided with an armature member (16), first and second electromagnets (18, 19) disposed on both sides of said armature member (16) leaving suitable spaces therebetween, and a spring member (17) forcing said armature member (16) to lie between said first and second electromagnets when both of them are de-energised.

4. A camera as claimed in claim 3, in which said blade means (8, 9, 22, 23) are used as aperture control elements which provide maximum aperture sizes when said first electromagnet (18) is energised, minimum aperture sizes when said second electromagnet (19) is energised and an intermediate aperture sizes when both of said electromagnets (18, 19) are de-energised.

5. A camera as claimed in claims 3 or 4, in which said first and second blades (8, 9) are pivotally mounted on first and second shafts (10, 11), respectively, so as to move in directions opposite to each other.

6. A camera as claimed in claims 3 to 5, in which said first and second blades (8, 9) include slots (8c, 9c) extending in directions opposite to each other, said respective slots being engaged by a pin member (14) provided on said pivotal driving lever (13).

7. A camera as claimed in claim 4, in which said first and second blades (22, 23) are pivotally mounted on a common shaft (24).

8. A camera as claimed in claim 7, in which said pivotal drive lever (26) has a T-shaped configuration.

9. A camera as claimed in claim 2, in which said drive means comprises a pivotal lever (68) with one end connected to said first and second blades (64, 65) and the opposite end provided with an armature member, a spring member (72) for forcing said driving lever to be in a position where said blades (64, 65), respectively, intercept the optical paths of said first and second objective lenses (2, 4) and an electromagnet (71) for holding said armature member to move said plates (64, 65) from said intercepting position.

10. A camera as claimed in claim 9, in which said first and second blades (64, 65) are pivotally mounted on a common shaft (66).

11. A camera as claimed in claim 10, in which said lever (68) has a T-shaped configuration.

12. A camera as claimed in claim 1, wherein said blade means are in the form of shutter blades (34, 35) mounted on a base plate (33) provided with apertures (33a, 33b) coincident with the optical axes (L1, L2).

13. A camera as claimed in claim 12, in which said shutter blades (34, 35) are held by spring members (38, 39) in position that intercept the optical paths respectively, and which further comprises a drive member (45) for pivoting the blades (34, 35) so as commonly to open the apertures (33a, 33b).

14. A camera as claimed in any one of the preceding claims wherein reflective means (5) are provided behind the first lens (4) whereby light from the first lens (4) follows a Z-shaped optical path as it travels from the first lens (4) via the reflective means (5) and the selection means (3) to the exposure frame (1).

**Patentansprüche**

1. Eine Kamera umfassend erste und zweite Objektivlinsen (2, 4) mit unterschiedlichen Brennweiten, deren jeweilige optische Achsen (L1, L2) nebeneinander angeordnet sind, Wahlmittel (3) zur Herstellung wählbarer erster und zweiter von den Linsen (2, 4) jeweils zu einem Belichtungsrahmen (1) führender Strahlengänge sowie gemeinsam bedienbare Belichtungsregelelemente für die besagten Linsen, dadurch gekennzeichnet, daß die besagten Belichtungsregelelemente als Iris und Verschluß kombiniert wirken und Lamellenmittel (8, 9, 22, 23, 34, 35, 64, 65) umfassen, die sich quer zu den Strahlengangen (L1, L2) der Linsen (2, 4) erstrecken, wobei die besagten Lamellenmittel im Verhältnis zueinander beweglich sind, so daß sie Öffnungen abgrenzen, die zwecks Durchgang von Licht durch die Linsen (2, 4) entlang des besagten ersten bzw. zweiten Strahlengangs zu dem Belichtungsrahmen (1) gemeinsam geöffnet und vollständig geschlossen werden können, sowie ein Antriebsmittel (13, 26, 68), dessen Funktion in der Erzeugung der besagten relativen Bewegung der Lamellenmittel besteht, wobei die Öffnungsgrößen so beschaffen sind, daß sie am Belichtungsrahmen für jeweils beide der Linsen (2, 4) im wesentlichen die gleiche Belichtungsbedingung bewirken.

2. Eine Kamera nach Anspruch 1, dadurch gekennzeichnet, daß die besagten Lamellenmittel eine erste Lamelle (8, 23, 64) mit einer darin befindlichen ersten Aussparung (8a, 23a, 64a) und einer zweiten Aussparung (8b, 23b, 64b) umfassen, die in einer Richtung im rechten Winkel zu den Lichtgängen (L1, L2) der besagten ersten und zweiten Objektivlinsen (2, 4) beweglich ist, sowie eine zweite Lamelle (9, 22, 65) mit einer dritten Aussparung (9a, 22a, 65a) und einer vierten Aussparung (9b, 22b, 65b), die der besagten ersten bzw. zweiten Aussparung entsprechen, wobei die zweite Lamelle so angeordnet ist, daß sie sich in zu der besagten ersten Lamelle entgegengesetzter Richtung bewegt; dabei bilden die besagten jeweiligen Aussparungen die besagte erste bzw. zweite Öffnung.

3. Eine Kamera nach Anspruch 2, dadurch gekennzeichnet, daß das Antriebsmittel einen um einen Drehpunkt schwenkbaren Antriebshebel (13, 26) umfaßt, dessen eines Ende mit den besagten ersten und zweiten Lamellen (8, 9, 22, 23) in Verbindung steht, während das gegenüberliegende Ende mit einem Armaturteil (16) versehen ist, sowie mit ersten und zweiten Elektromagneten (18, 19) zu beiden Seiten des besagten Armaturteils (16), die so angeordnet sind, daß zwischen ihnen ein geeigneter Abstand besteht, und einem Federteil (17), der das besagte Armaturteil (16) zwingt, die Lage zwischen den besagten ersten und zweiten Elektromagneten einzunehmen, wenn beide davon ausgeschaltet sind.

4. Eine Kamera nach Anspruch 3, bei der die besagten Lamellenmittel (8, 9, 22, 23) als Öffnungsregelelemente dienen, die maximale Öffnungsgrößen bewirken, wenn der besagte erste Elektromagnet (18) eingeschaltet ist, kleinste Öffnungsgrößen, wenn der besagte zweite Elektromagnet (19) eingeschaltet ist, und mittlere Öffnungsgrößen, wenn beide der besagten Elektromagneten (18, 19) ausgeschaltet sind.

5. Eine Kamera nach Anspruch 3 oder 4, bei der die besagten ersten und zweiten Lamellen (8, 9) um einen Drehpunkt schwenkbar an ersten bzw. zweiten Spindeln (10, 11) angeordnet sind, so daß sie sich in zueinander entgegengesetzten Richtungen bewegen.

6. Eine Kamera nach den Ansprüchen 3 bis 5, bei der die besagten ersten und zweiten Lamellen (8, 9) Schlitze (8c, 9c) umfassen, die sich in zueinander entgegengesetzten Richtungen erstrecken, wobei ein an dem besagten um einen Drehpunkt schwenkbaren Antriebshebel (13) vorgesehenes Stiftelement (14) in die besagten jeweiligen Schlitze eingreift.

7. Eine Kamera nach Anspruch 4, bei der die besagten ersten und zweiten Lamellen (22, 23) um einen Drehpunkt schwenkbar an einer gemeinsamen Spindel (24) angeordnet sind.

8. Eine Kamera nach Anspruch 7, bei der der besagte um einen Drehpunkt schwenkbare Antriebshebel (26) T-förmig ist.

9. Eine Kamera nach Anspruch 2, bei der das besagte Antriebsmittel einen um einen Drehpunkt schwenkbaren Hebel (68) umfaßt, dessen eines Ende mit den besagten ersten und zweiten Lamellen (64, 65) in Verbindung steht, während das gegenüberliegende Ende mit einem Ankerteil versehen ist, sowie mit einem Federteil (72), dessen Funktion darin besteht, den besagten Antriebshebel in eine Lage zu zwängen, in der die besagten jeweiligen Lamellen (64, 65) die Strahlengänge der besagten ersten und zweiten Objektivlinsen (2, 4) unterbrechen, und einem Elektromagneten (71), der bewirkt, daß das besagte Armaturteil die besagten Lamellen (64, 65) aus der besagten Unterbrechungslage bewegt.

10. Eine Kamera nach Anspruch 9, bei der die besagten ersten und zweiten Lamellen (64, 65) um einen Drehpunkt schwenkbar an einer gemeinsamen Spindel (66) angeordnet sind.

11. Eine Kamera nach Anspruch 10, bei der der besagte Hebel (68) T-förmig ist.

12. Eine Kamera nach Anspruch 1, bei der die besagten Lamellenmittel an einer Grundplatte (33) angeordnete Verschlußlamellen (34, 35) bilden, wobei die besagte Grundplatte mit mit den Lichtgängen (L1, L2) zusammenfallenden Öffnungen (33a, 33b) versehen ist.

13. Eine Kamera nach Anspruch 12, bei der die besagten Verschlußlamellen (34, 35) durch Federteile (38, 39) in einer Lage gehalten werden, in der sie die jeweiligen Strahlengänge unterbrechen, und die außerdem ein Antriebsteil (45) zum Schwenken der Lamellen (34, 35) um einen Drehpunkt umfaßt, um die Öffnungen (33a, 33b) gemeinsam zu öffnen.

14. Eine Kamera nach einem der vorstehenden Ansprüche, bei der hinter der ersten Linse (4) Spiegelungsmittel (5) vorgesehen sind, so daß von der ersten Linse (4) ausgehendes Licht einem Z-förmigen Strahlengang folgt, indem es von der ersten Linse (4) über Spiegelungsmittel (5) und Wahlmittel (3) zu dem Belichtungsrahmen (1) verläuft.

## Revendications

1. Appareil de photographie comportant une première et une seconde lentilles d'objectif (2, 4) de focales différentes dont les axes optiques respectifs (L1, L2) sont disposés l'un à côté de l'autre, un dispositif sélectionneur (3) permettant un premier et un second parcours optiques respectivement des lentilles (2, 4) à un cadre d'exposition (1), et des contrôles de pose à commande commune pour lesdites lentilles, appareil caractérisé en ce que lesdits contrôles de pose fonctionnent comme un ensemble combiné diaphragme à iris et obturateur et comprennent des lamelles (8, 9, 22, 23, 34, 35, 64, 65) se prolongeant selon un axe transversal aux axes optiques (L1, L2) des lentilles (2, 4), lesdites lamelles étant mobiles les unes par rapport aux autres afin de définir des ouvertures communes pouvant s'ouvrir et totalement se refermer afin de permettre à la lumière de traverser les lentilles (2, 4) et d'atteindre le cadre d'exposition (1), selon respectivement lesdits premier et second parcours optiques, ainsi que des dispositifs de commande (13, 26, 68) destinés à entraîner ledit mouvement relatif des lamelles, les dimensions des ouvertures étant telles qu'elles produisent sensiblement les mêmes conditions de pose au niveau du cadre d'exposition respectivement pour les deux lentilles (2, 4).

2. Appareil de photographie suivant la revendication 1, caractérisé en ce que lesdites lamelles comportent une première lamelle (8, 23, 64) comprenant un premier (8a, 23a, 64a) et un second évidements (8b, 23b, 64b), déplaçables dans un sens perpendiculaire aux axes optiques (L1, L2) desdites première et seconde lentilles de l'objectif (2, 4) et une seconde lamelle (9, 22, 65) comprenant un troisième (9a, 22a, 65a) et un quatrième évidements (9b, 22b, 65b) qui correspondent respectivement auxdits premier et second évidements, cette seconde lamelle étant disposée de sorte à offrir un mouvement dans le sens opposé à celui de ladite première lamelle; lesdits évidements correspondants formant respectivement lesdites première et seconde ouvertures.

3. Appareil de photographie suivant la revendication 2, caractérisé en ce que le dispositif de commande comporte un levier d'entraînement pivotant (13, 26) dont une extrémité est reliée auxdites première et seconde lamelles (8, 9, 22, 23) et dont l'autre extrémité comporte une plaquette d'induit (16), un premier et un second électro-aimants (18, 19) disposés des deux côtés de ladite plaquette d'induit (16) avec des espaces intercalaires suffisants, et un ressort (17) forçant ladite plaquette d'induit (16) à s'immobiliser entre lesdits premier et second électro-aimants lorsque ces deux aimants sont désexcités.

4. Appareil de photographie suivant la revendication 3, où lesdites lamelles (8, 9, 22, 23) servent de commandes de contrôle de l'ouverture qui assurent une ouverture maximale lorsque lesdits électro-aimants (18) sont excités, une ouverture minimale lorsque ledit second électro-aimant (19) est excité et une ouverture intermédiaire lorsque les deux électro-aimants (18, 19) sont désexcités.

5. Appareil de photographie suivant les revendications 3 ou 4, où lesdites première et seconde lamelles (8, 9) sont montées respectivement sur un premier et un second axe-pivots (10, 11) afin de permettre des mouvements dans les sens opposés.

6. Appareil de photographie suivant les revendications 3 à 5, où lesdites première et seconde lamelles (8, 9) comportent des fentes (8c, 9c) de prolongements opposés, lesdites fentes s'emboîtant chacune sur un pignon (14) monté sur ledit levier pivotant d'entraînement (13).

7. Appareil de photographie suivant la revendication 4, où lesdites première et seconde lamelles (22, 23) sont montées sur un axe-pivot commun (24).

8. Appareil de photographie suivant la revendication 7, où ledit levier pivotant d'entraînement (26) présente une forme en T.

9. Appareil de photographie suivant la revendication 2, où ladite commande d'entraînement comporte un levier pivotant (68) dont une extrémité est reliée auxdites première et seconde lamelles (64, 65) et dont l'autre extrémité comporte une plaquette d'induit, un ressort (72) forçant ledit levier d'entraînement en une position dans laquelle lesdits lamelles (64, 65) interceptent respectivement les parcours optiques desdites première et seconde lentilles de l'objectif (2, 4) et un électro-aimant (71) destiné à maintenir ladite plaquette d'induit pour déplacer lesdites lamelles (64, 65) de ladite position d'interception.

10. Appareil de photographie suivant la revendication 9, où lesdites première et seconde lamelles (64, 65) sont montées sur pivot sur un axe commun (66).

11. Appareil de photographie suivant la revendication 10, où ledit levier (68) présente une forme en T.

12. Appareil de photographie suivant la revendication 1, où lesdites lamelles présentent la forme de lamelles d'obturateur (34, 35) montées sur une plaque d'appui (33) comportant des ouvertures (33a, 33b) qui coincident avec les axes optiques (L1, L2).

13. Appareil de photographie suivant la revendication 12, où lesdites lamelles d'obturateur (34, 35) sont maintenues par des ressorts (38, 39) en une position leur permettant d'intercepter respectivement les parcours optiques et qui comprennent de plus un dispositif d'entraînement (45) destiné à faire pivoter les lamelles (34, 35) de sorte à ouvrir ensemble les ouvertures (33a, 33b).

14. Appareil de photographie suivant l'une quelconque des revendications précédentes, où un écran réfléchissant (5) est placé derrière la première lentille (4) de telle sorte que la lumière provenant de la première lentille (4) suive un parcours optique en forme de Z lors de sa traversée de la première lentille (4) au cadre d'exposition (1) en passant par l'écran réfléchissant (5) et le dispositif sélectionneur (3).

# FIG. 1

# FIG. 2

1

# FIG. 3

# FIG. 4

2

# FIG. 5

# FIG. 7

# FIG. 6

EP 0 124 272 B1